# EUROPÄISCHE PATENTANMELDUNG

(11) **EP 2 216 644 A2**
(43) Veröffentlichungstag der Anmeldung: **11.08.2010**
(21) Anmeldenummer: 09170161.5
(22) Anmeldetag: 14.09.2009
(51) Int. Cl.: G01N 21/95, G01N 21/952

(54) **Verfahren und Vorrichtung zur Qualitätsprüfung**

(30) Priorität: 04.02.2009 DE 102009007570
(71) Anmelder: CLAAS Fertigungstechnik GmbH, 48361 Beelen (DE)
(72) Erfinder: Hilbk-Kortenbruck, Frank, 48231, Warendorf (DE); Krauhausen, Michael, 53066, Aachen (DE)

(57) **Zusammenfassung**

Eine Vorrichtung zur Qualitätsprüfung einer Oberfläche eines Werkstücks (3) umfasst:
- wenigstens einen ersten Sensor (9), der einen Sender (11) für einen Messstrahl (12) und einen Empfänger (14) für einen zurückgeworfenen Strahl aufweist, wobei der Kessstrahl (12) und eine Richtung des zurückgeworfenen Strahls, für die der Empfänger (14) empfindlich ist, eine Messebene definieren;
- Antriebsmittel zum Bewegen von Werkstück (3) und Sensor (9) relativ zueinander derart, dass eine Vorzugsrichtung von Rissen (10) an jedem vom Messstrahl (12) getroffenen Punkt der zu untersuchenden Oberfläche in der Messebene liegt;
- einen Signalprozessor zum Verarbeiten eines Ausgangssignals des Empfängers (14), der eingerichtet ist, ein für einen Riss (10) charakteristisches Fluktuationsmuster im Ausgangssignal des Empfängers (14) zu erfassen.

## Beschreibung

Die vorliegende Erfindung betrifft ein Verfahren und eine Vorrichtung zur Qualitätsprüfung einer Oberfläche eines Werkstücks, insbesondere zur Erfassung von Rissen in einem Werkstück.

Ein Verfahren und eine Vorrichtung zur Erfassung von Rissen oder Löchern in einem gebogenen Rohr sind aus DE 196 00 176 A1 bekannt. Ein Sensor dieser bekannten Vorrichtung umfasst einen Laser, der einen Lichtstrahl emittiert. Der Lichtstrahl wird an der Oberfläche des zu untersuchenden Rohrs reflektiert, und reflektiertes Licht wird von dem sensor wieder empfangen. Wenn der Strahl auf Risse oder Löcher des Rohrs trifft, wird er stark gestreut, so dass die Intensität des vom sensor wieder empfangenen Lichtstrahls wesentlich verringert ist.

In demselben Dokument wird auch vorgeschlagen, einen Triangulationstaster für berührungslose Abstandsmessungen zu verwenden. Ein Triangulationstaster oder -sensor umfasst herkömmlicherweise eine Strahlquelle wie etwa einen Laser und eine Zeile von Empfängerelementen, auf die ein von dem Laser angestrahlter Punkt durch eine Linse abgebilder wird. Aus dem Ort der Zeile, auf den der Punkt abgebildet wird, kann eine Information über die Entfernung zu dem Punkt abgeleitet werden. Die Intensität des zum Triangulationssensor zurückgeworfenen Lichts hat auf die gemessene Entfernung keinen Einfluss.

Ein Problem der herkömmlichen Vorrichtung ist, dass die Intensität des reflektierten Strahls nicht nur auf Risse oder Löcher in der Oberfläche des Werkstücks reagiert, sondern auf jede beliebige Änderung der Oberflächenqualität, wie etwa raue oder matte Oberflächenbereiche, Flecken, etc., die für den Gebrauchswert des Rohrs wesentlich weniger relevant sind als ein Risse. Die Wahrscheinlichkeit von Erfassungsfehlern ist daher hoch.

Auf den ersten Blick könnte es naheliegend erscheinen, aus mit einem Triangulationssensor gewonnenen Abstandsmesswerten Hinweise für das Vorliegen eines Lochs oder Risses abzuleiten, denn, so könnte man meinen, müsste der mit einem Triangulationssensor gemessene Abstand zunehmen, wenn der Sensor einem Loch in einer Oberfläche gegenüberliegt. Dies trifft allerdings nur mit gewichtigen Einschränkungen zu: Um eine Abstandsinformation gewinnen zu können, dürfen der emittierte Lichtstrahl und die Blickrichtung des Empfängers nicht parallel sein. Für eine genaue Messung ist ein Winkel zwischen beiden wünschenswert. Trifft jedoch der Lichtstrahl in ein enges Loch oder einen Riss, so kann der Empfänger die vom Lichtstrahl beleuchtete Oberfläche meist nicht sehen. Das Abstandsmessergebnis ist bestimmt durch reflektiertes Licht von dem Loch benachbartem Oberflächen, die aus der Richtung des Empfängers sichtbar sind. Das Loch selber ist im Abstandsmessergebnis nicht erkennbar.

Aufgabe der Erfindung ist, ein Verfahren und eine Vorrichtung zu schaffen, die eine Qualitätsprüfung einer Oberfläche eines Werkstücks in kurzer Zeit, mit einem hohen Grad von Gewissheit und einem geringen Verarbeitungsaufwand ermöglichen.

Die Aufgabe wird zum einen gelöst durch ein Verfahren mit den schritten:
a) Bereitstellen eines Sensors mit einem Sensor für einen Messstrahl und einen Empfänger für einen zurückgeworfenen Strahl, wobei der Messstrahl und eine Richtung des zurückgeworfenen Strahls, für die der Empfänger empfindlich ist, eine Messebene definieren;
b) Bewegen von Oberfläche und Sensor relativ zueinander derart, dass eine Vorzugsrichtung von Rissen an jedem vom Messstrahl getroffenen Punkt der zu untersuchenden Oberfläche in der Messebene liegt;
c) Erfassen eines Risses in der Oberfläche bei Vorliegen eines für einen Riss charakteristischen Fluktuationsmusters in einem Ausgangssignal des Empfängers.

Im einfachsten Fall kann das Ausgangssignal repräsentativ sein für die vom Empfänger empfangene Strahlintensität. Da die vorzugsrichtung der Risse in der Messebene liegt, ist die Wahrscheinlichkeit hoch, dass der Empfänger in einen Riss "hineinsehen" kann. Das Vorhandensein eines Risses äußert sich daher nicht wie im Stand der Technik durch eine Verringerung der empfangenen Strahlintensität (für die es diverse andere Ursachen geben kann), sondern, da der Messstrahl die Innenseiten des Risses ausleuchtet, bekommt der Empfänger eine große ausgeleuchtete Fläche zu sehen und liefert ein dementsprechend intensives Signal.

Einer bevorzugten Weiterbildung zufolge ist das Ausgangssignal des Empfängers repräsentativ für den Abstand zwischen Sensor und Oberfläche. In diesem Fall ist das Vorhandensein eines Risses an einem kurzzeitigen Anstieg des erfassten Abstands zu erkennen.

Um die Erkennungssicherheit zu verbessern, kann vorgesehen werden, dass aus dem Ausgangssignal des Empfängers erhaltene Abstandsmesswerte mit Soll-Abstandswerten verglichen werden. So ist es auch möglich, Risse von gewollten Konturen des Werkstücks zu unterscheiden.

Da jeder Riss zu einer kurzzeitigen Änderung des Messsignals führt, während der Messstrahl über den Riss hinweg streicht, kann die Erkennungssicherheit durch Hochpassfiltern des Ausgangssignals des Empfängers gesteigert werden.

Die Vorzugsrichtung wird zweckmäßigerweise quer zu einer im Werkstück wirkenden Zugspannung gewählt, da dies die Richtung ist, in der von der Zugspannung verursachte Risse im Wesentlichen entstehen werden.

Das Verfahren ist besonders zweckmäßig anwendbar an einem auf eine Welle aufgepressten werkstück. Hier ist die Richtung der Zugspannung die Umfangsrichtung des Werkstücks. Infolge dessen ist die vorzugsrichtung von Rissen in dem Werkstück immer axial und radial.

Oberflächen des Werkstücks können zweckmäßigerweise durch Drehen von Werkstück und Sensor relativ zueinander um eine Achse der Welle abgetastet werden.

Diese Achse liegt zweckmäßigerweise in der Messebene des Sensors.

Eine Vorrichtung zur Durchführung des oben beschriebenen Verfahrens umfasst erfindungsgemäß:
- wenigstens einen ersten Sensor, der einen Sender für einen Messstrahl und einen Empfänger für einen zurückgeworfenen Strahl aufweist, wobei der Messstrahl und eine Richtung des zurückgeworfenen Strahls, für die der Empfänger empfindlich ist, eine Messebene definieren;
- Antriebsmittel zum Bewegen von Oberfläche und Sensor relativ zueinander derart, dass eine Vorzugsrichtung von Rissen an jedem vom Messstrahl getroffenen Punkt der zu untersuchenden Oberfläche in der Messebene liegt;
- einen Signalprozessor zum Verarbeiten eines Ausgangssignals des Empfängers, wobei der Signalprozessor eingerichtet ist, ein für einen Riss charakteristisches Fluktuationsmuster im Ausgangssignal des Empfängers zu erfassen.

Als erster Sensor ist ein Triangulationssensor bevorzug, dessen Empfänger eine sich in der Messebene erstreckende Zeile von Empfängerelementen umfasst. Der Triangulationssensor kann genutzt werden, um gleichzeitig mit der Risserfassung auch eine Überprüfung der Maßhaltigkeit des Werkstücks durchzuführen.

Die Antriebsmittel umfassen vorzugsweise einen Drehantrieb mit einer in der Messehene verlaufenden Drehachse, um Werkstück und ersten Sensor in Bezug zueinander zu rotieren.

Ein Linearantrieb mit einer zur Drehachse parallelen Vorschubrichtung kann dazu dienen, verschiedene entlang der Drehachse verteilte oberflächenabschnitte des zu überprüfenden Werkstücks nacheinander vor dem Sensor zur Untersuchung zu platzieren.

Zweckmäßigerweise ist ein zweiter Sensor mit einer Messebene vorgesehen, die die Messebene des ersten Sensors kreuzt. Ein solcher Sensor ist, wenn er die gleiche Oberfläche wie der erste Sensor untersucht, gegen in der Vorzugsrichtung verlaufende Risse weniger empfindlich als der erste Sensor, so dass durch Vergleichen der Messsignale der beiden Sensoren die Sicherheit der Risserkennung gesteigert werden kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht einer erfindungsgemäßen Qualitätsprüfvor- richtung;
- Fig. 2: eine schematische Darstellung der Wirkungsweise eines Triangulations- sensors, der einen Riss erfasst;
- Fig. 2a: ein Messsignal einer Elementezeile des Triangulationssensors, erhalten an einer intakten Werkstückoberflä- che in einem ersten Abstand zum Sensor;
- Fig. 2b: ein Ausgangssignal der Elementezei- le, erhalten an einer intakten Werkstückoberfläche in einem ver- ringerten Abstand vom Sensor;
- Fig. 2c: ein Messsignal der Elementezeile, erhalten an einem Riss;
- Fig. 3: einen schematischen Querschnitt durch eine Nockenwelle und einen Graphen eines an dieser Nockenwelle erhaltenen Abstandsmesssignals;
- Fig. 4: einen Triangulationssensor an einer Oberfläche, die einen quer zur Messebene verlaufenden Riss auf- weist;
- Fig. 4a: das an der Oberfläche der Fig. 4 erhaltene Ausgangssignal der Ele- mentezeile des Sensors;
- Fig. 4b: das Ausgangssignal der Elementezei- le eines Sensors mit zum Riss pa- ralleler Messebene;
- Fig. 4c: die Differenz der Signale aus Fig. 4a und 4b;
- Fig. 5: eine zu Fig. 3 analoge Darstellung des Messsignals des Sensors aus Fig. 4;
- Fig. 6: eine schematische Darstellung eines Triangulationssensors mit Ele- mentezeilen; und
- Fig. 7: einen Schnitt durch einen Abschnitt einer Nockenwelle mit auf Stirnflä- chen eines Nocken ausgerichteten Sensoren.

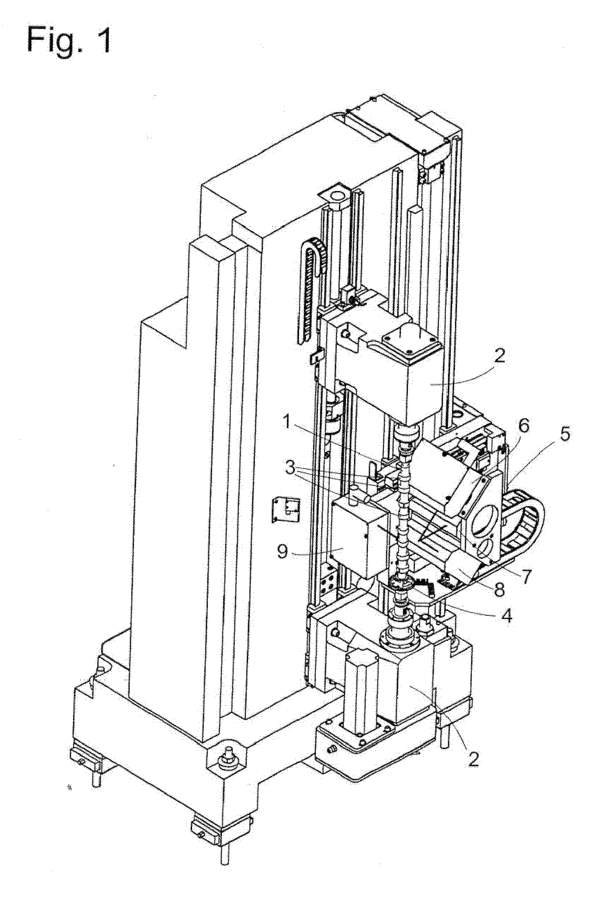

Fig. 1 zeigt eine perspektivische Ansicht eines Geräts für die Qualitätsprüfung von Nockenwellen. Eine zu überprüfende nockenwelle 1 ist in der Vorrichtung vertikal zwischen zwei Backen 2 eingespannt und durch einen Motor in einem Backen 2 um ihre Längsachse drehbar. Die Nockenwelle 1 ist von beliebiger herkömmlicher Art. Die exemplarisch gezeigte Nockenwelle 1 hat einen massiven Schaft mit insgesamt acht aufgepressten Nocken 3 und einem Kettenrad 4, das als Referenz für die Winkelorientiefung der Nocken 3 dient.

Ein an einem Gestell der Vorrichtung vertikal verschiebbarer Schlitten 5 trägt vier Triangulationssensoren 6, 7, 8, 9. Jeder dieser Triangulationssensoren umfasst einen Laser als Quelle für einen Lichtstrahl und eine Zeile von lichtempfindlichen Elementen wie etwa eine CCD-Zeile, die von einer zu prüfenden Oberfläche der Nockenwelle 1 reflektierte Strahlung des Lasers empfängt. Die Strahlrichtung des Lasers und die Ausrichtung der CCD-Zeile definieren bei jedem Triangulationssensor eine Messebene, die im Falle der Sensoren 6 und 8 die Achse der Nockenwelle unter einem Winkel von 45° kreuzt, beim Sensor 7 senkrecht zur Achse der Nockenwelle 1 verläuft und beim Sensor 9 parallel zur Achse ausgerichtet ist.

Der Sensor 9 ist horizontal und quer zu seiner Messebene verschiebbar, so dass diese sowohl entlang der Achse der Nockenwelle 1 als auch seitlich gegen diese versetzt verlaufen kann. Eine versetzte Anordnung des Sensors 9 ist zweckmäßig, wenn mit diesem stark geneigte Oberflächen wie etwa die Flanken von Zähnen eines Zahnrades an der Nockenwelle 1 untersucht werden sollen. Im Rahmen der Rissprüfung an den Nocken 3 ist jedoch allein diejenige Positionierung des Sensors 9 von Interesse, bei der die Achse der Nockenwelle 1 in der Messebene verläuft.

Die Laser der Sensoren 7 und 9 emittieren in horizontaler Richtung und befinden sich auf gleicher Höhe, so dass sie im Laufe einer Drehung der Nockenwelle 1 um ihre Achse eine gleiche Spur am Umfang eines der Nocken 3 abtasten.

Die Nocken 3 stehen durch das Aufpressen auf den Schaft unter Spannung in Umfangsrichtung. Wenn diese Spannung zur Rissbildung in einem Nocken 3 führt, dann verläuft ein Riss an einer Umfangsfläche des Nockens im Wesentlichen in axialer Richtung.

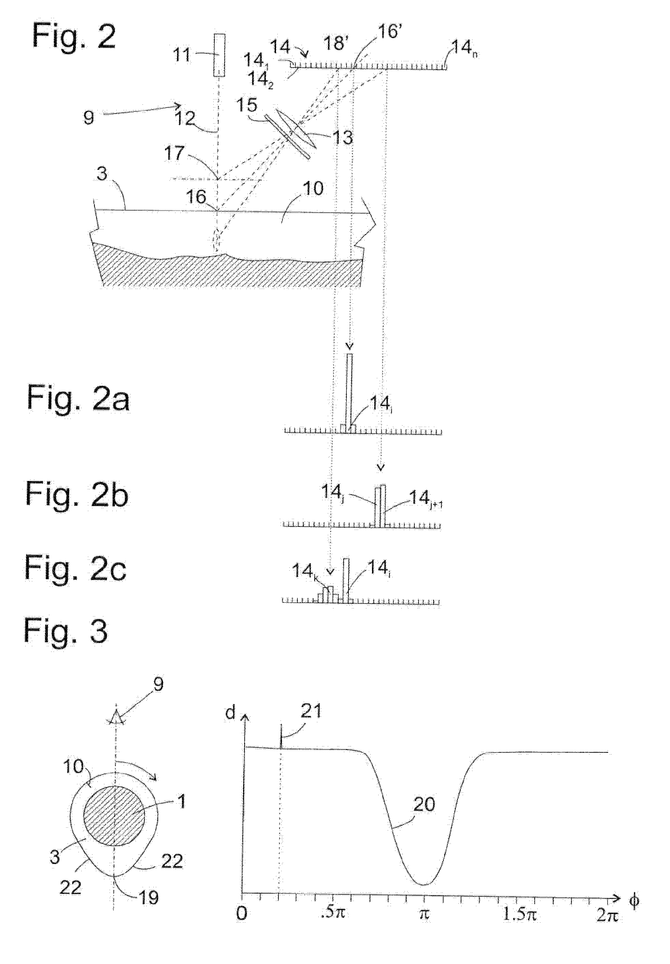

Fig. 2 zeigt eine schematische Darstellung des Sensors 9, der Umfangsfläche eines Nockens 3 gegenüberliegend. Der Nocken 3 ist partiell im Schnitt entlang der Messebene des Sensors 9 gezeigt; in der Schnittebene weist der Nocken 3 einen oberflächlichen Riss 10 auf.

Ein Laser 11 des Triangulationssensors 9 strahlt senkrecht auf den Nocken 3.

Eine Linse 13 bildet eine vom Strahl 12 des Lasers 11 ausgeleuchtete Oberflächenregion des Nockens 3 auf eine CCD-Zeile 14 mit Elementen 14-1, 14-2, ..., 14-n ab. Ein im Strahlengang des reflektierten Lichts angeordnetes schmalbandiges Farbfilter 15 ist auf die wellenlänge des Lasers 11 abgestimmt, um die CCD-Zeile 14 gegen andersfarbiges Streulicht aus der Umgebung unempfindlich zu machen.

Wenn der Nocken 3 intakt wäre, würde der Laser 11 lediglich einen Punkt 16 an der Oberfläche des Nockens 3 ausleuchten, der von der Linse 13 auf eine kleine Zahl von Elementen am Ort 16' der CCD-Zeile 14 abgebildet würde. Ein typisches Erfassungsergebnis in einem solchen Falle wäre die in Fig. 2a gezeigte Intensitätsverteilung: die über der CCD-Zeile 14 eingezeichneten Balken repräsentieren jeweils die von einem einzelnen Element der Zeile empfangene Lichtintensität. Ein einziges Element 14-i der CCD-Zeile 14 empfängt einen Großteil des reflektierten Lichtes, die Intensität an benachbarten Elementen ist deutlich niedriger. Ein an die CCD-Zeile 14 angeschlossener Signalprozessor, der jedes Element 14₁, 14₂, ..., 14ₙ einzeln ausliest, ist in der Lage, mit an sich bekannten Techniken die Position des Punkts 16 mit einer noch höheren Auflösung zu berechnen, als dem Abstand der Elemente der CCD-Zeile 14 entspricht. So kann zum Beispiel aus der Tatsache, dass die zum stärkstbeleuchteten Element 14ᵢ benachbarten Elemente der Zeile 14 in etwa gleiche Lichtintensitäten empfangen, geschlossen werden, dass das Bild 16' des Punktes 16 exakt mittig auf dem stärkst beleuchteten Element 14ᵢ liegt.

Änderungen des Abstands zwischen dem Sensor 9 und der Oberfläche des Nockens 3, die sich ergeben, wenn der Nocken 3 unter dem Sensor 9 hindurchrotiert, führen zu einer Verlagerung des Lichtflecks auf der CCD-Zeile 14. So wird beispielsweise, wenn der Strahl bereits am Punkt 17 auf die Oberfläche des Nockens trifft, die in Fig. 2b gezeigte, gegenüber derjenigen der Fig. 2a seitwärts verschoben Intensitätsverteilung auf der CCD-Zeile 14 erhalten. Aus der Tatsache, dass hier zwei benachbarte Elemente 14ⱼ, 14ⱼ₊₁ der Zeile 14 in etwa gleiche Intensitäten empfangen, kann gefolgert werden, das das Bild des Punktes 17 an der Grenze zwischen diesen beiden Elementen liegt.

In dem Fall, dass der Strahl 12 in den Riss 10 trifft, vergrößert sich der mit Hilfe des Triangulationssensors 9 erfassbare Abstand; da der Riss 10 sich in der Blickrichtung der CCD-Zeile 14 erstreckt, wird eine vom Strahl 12 beleuchtete Region 18 an einer Flanke des Risses 10 bei 18' auf die CCD-Zeile 14 abgebildet. Die Intensitätsverteilung auf der CCD-Zeile 14 kann dann die exemplarisch in Fig. 2c gezeigte Form annehmen: ein Teil des Strahls 12, der neben den Riss 10 trifft, liefert, wenn auch mit verringertem Pegel, die gleiche Intensitatsverteilung wie in Fig. 2a, mit einem Maximum beim Element 14ᵢ. Ein zweites Maximum der Intensität bei einem Element 14ₖ entspricht dem Bild der Region 18.

Eine Umwandlung der in der CCD-Zeile 14 erhaltenen Intensitätsverteilungen in Abstandswerte kann in einer Auswerteelektronik des Sensor 9 selbst stattfinden, oder ein digitaler Datenprozessor kann unmittelbar an die CCD-Zeile angeschlossen sein, um die Intensitätswerte jedes einzelnen Elements auszulesen und deren Auswertung vorzunehmen. In beiden Fällen kann eine Umrechnung der erhaltenen Intensitäten in einen Abstandsmesswert durch Berechnen eines Schwerpunkts der Intensitätsverteilung erfolgen. Im Falle der in den Figuren 2a, 2b gezeigten Verteilungen liegt der Schwerpunkt am Element 14ᵢ bzw. zwischen den Elementen 14ⱼ und 14ⱼ₊₁ und gibt den Abstand zwischen Sensor und Nocken 3 exakt wieder. Im Falle der Fig. 2c liegt der Schwerpunkt zwischen den Elementen 14ᵢ und 14ₖ, und es wird als Abstandsmesswert ein Wert erhalten, der zwischen dem Abstand vom Sensor zur Nockenoberfläche und dem Abstand vom Sensor zum Boden des Risses 10 liegt. Dies ist jedoch nicht kritisch, da es nur auf die Erfassung des Vorhandenseins des Risses 10, nicht aber auf die Kenntnis von seiner Tiefe ankommt.

Fig. 3 zeigt exemplarisch den verlauf des gemessenen Abstands d als Funktion des Drehwinkels φ zwischen Sensor 9 und Nocken 3 im Falle des im linken Teil der Figur exemplarisch in einer Draufsicht dargestellten Nockens 3 mit Riss 10. Die Messung beginnt bei φ=0 in der dargestellten Orientierung, in der eine spitze 19 des Nockens vom Sensor 9 abgewandt ist, und der Nocken 3 wird im Uhrzeigersinn gedreht. Solange der Grundkreis des Nockens 3 dem Sensor 9 gegenüberliegt, ist das Messsignal im Wesentlichen konstant; wenn die Spitze 19 den Sensor 9 passiert, weist der Abstandsmesswert ein breites Minimum 20 auf. Ein Riss 10 auf dem Grundkreis des Nockens liefert einen isolierten Peak 21 in der Abstands-Messkurve.

Um einen Riss sicher zu erfassen, muss der Abstand zwischen zwei sukzessive an der Oberfläche des Nockens 3 aufgenommenen Messpunkten kleiner sein als die zu erwartende Rissbreite. Versuche haben gezeigt, dass circa 9000 Messungen pro Umdrehung der Welle 1 ausreichen, um Risse mit guter Sicherheit zu erkennen. Bei einer Messfrequenz der Triangulationssensoren von 60 bis 100 kHz genügen 0,5 Sekunden, um den Umfang des Nockens 3 komplett abzusuchen. Eine vollständige Untersuchung einer kompletten Nockenwelle benötigt daher nur wenige Sekunden und kann unmittelbar begleitend zur Fertigung der Nockenwellen stattfinden.

Anhand der in Fig. 3 dargestellten Abstandsmesswerte führt der signalprozessor verschiedene Qualitätsbeurteilungen durch. Zum einen vergleicht er den globalen Verlauf der Abstands-Messkurve mit einer Vorgabe, um festzustellen, ob Orientierung und Radius der Spitze 19 und gegebenenfalls der Verlauf von Flanken 22 des Nockens 3 beiderseits der Spitze 19 mit einer Vorgabe übereinstimmen. Ist dies nicht der Fall, muss die betreffende Nockenwelle ausgesondert und gegebenenfalls nachbearbeitet werden. Eine zweite Beurteilung betrifft die Suche nach Rissen. Um die Beurteilung, ob Risse vorhanden sind, im Signalprozessor zu automatisieren, ist es zweckmäßig, eine Hochpassfilterung der Abstandsmesswerte der Fig. 3 durchzuführen, die das auf die Spitze 19 zurückgehende Minimum 20 im Wesentlichen unterdrückt und den Peak 21 bestehen lässt. Wenn der Betrag des hochpassgefilterten Abstandsmesssignals einen geeignet festgelegten Grenzwert überschreitet, kann darauf auf das Vorliegen eines Risses geschlossen werden. Eine in einem digitalen Signalprozessor besonders einfach realisierbare Hochpassfilterung ist eine numerische Differentiation nach dem Drehwinkel φ.

Eine alternative Strategie zur Risserkennung nutzt zusätzlich den Triangulationssensor 7, dessen Messebene auf der des Sensors 9 senkrecht steht.

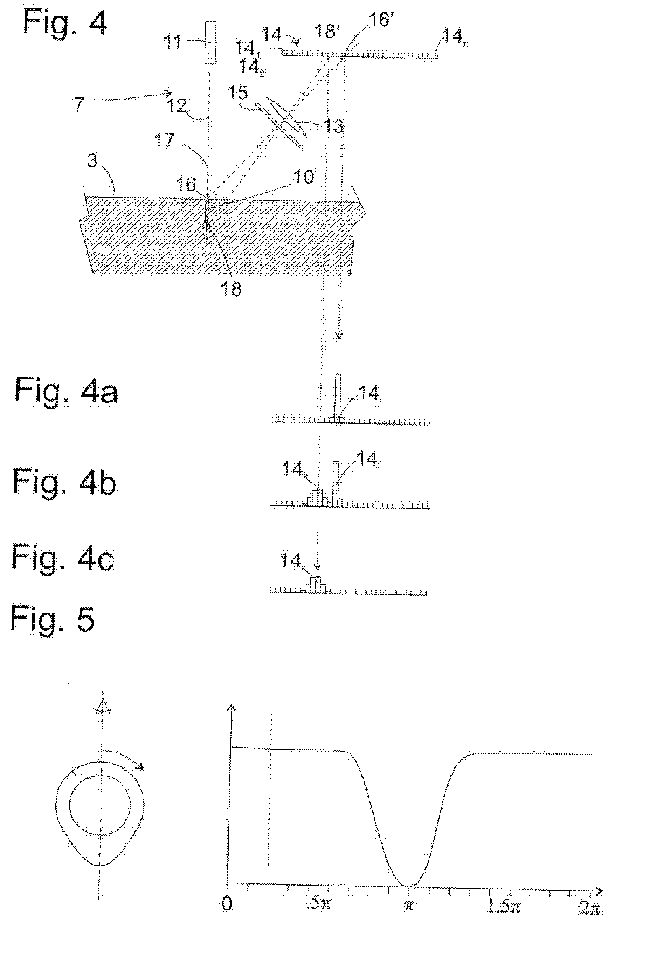

Fig. 4 zeigt eine zu Fig. 2 analoge Darstellung des Triangulationssensors 7. Die Messebene des Sensors 7, die gleichzeitig die Schnittebene der Figur ist, kreuzt den Riss 10 in der Oberfläche des zu untersuchenden Nockens 3. An einer intakten Oberfläche unterscheiden sich die Meßergebnisse der Sensoren 9 und 7 nicht. Wenn der Strahl des Lasers 11 des Sensors 7 in den Riss 10 trifft, erreicht kein reflektiertes Licht die CCD-Zeile 14. Allenfalls ein Teil des Strahls 12, der neben dem Riss 10 auf die Oberfläche des Nockens 3 trifft, liefert eine Intensitätsverteilung wie in Fig. 4a gezeigt, mit einem Intensitätsmaximum beim Element 14ᵢ. Die Verteilung unterscheidet sich von der an der intakten Oberfläche erhaltenen Verteilung der Fig. 2a nur durch ihre Intensität, aber nicht durch ihre Lage oder Form. Der Schwerpunkt der Intensitätsverteilung gemäß Fig. 4a ist somit derselbe wie gemäß Fig. 2a, d.h. der Sensor 7 "sieht" den Riss 10 nicht.

Das im Laufe einer Umdrehung der Nockenwelle 1 vom Sensor 7 gelieferte Messsignal, dargestellt im Graphen der Fig. 5, unterscheidet sich von demjenigen der Fig. 3 nur durch das Fehlen des Peaks 21. Wenn die beiden Sensoren 7, 9 mit zueinander orthogonalen Messebenen eingesetzt werden, um eine gleiche Spur am Umfang eines Nocken 3 abzutasten, dann kann das Vorhandensein eines Risses auch erfasst werden, indem der Signalprozessor die Differenz zwischen den Abstandsmesswerten der beiden Sensoren 7, 9 bildet. Diese Differenz ist nur an einem Riss signifikant von Null verschieden. Daher wird entschieden, dass ein Riss vorliegt, wenn die Differenz in einem beliebigen Bereich der abgetasteten Spur einen geeignet gewählten Grenzwert überschreitet.

Noch eine andere Strategie zur Erkennung eines Pisses ist, zu jedem abgetasteten Punkt an der Oberfläche des Nocken 3 die Differenz der an den einzelnen Elementen der CCD-Zeile 14 der Sensoren 7, 9 erhaltenen Intensitätsverteilungen zu bilden. Wenn der Signalprozessor beispielsweise die Differenz zwischen der Intensitätsverteilung der Fig. 4a und der am gleichen Punkt der Nockenoberfläche erhaltennen Verteilung der Fig. 2c (der Übersichtlichkeit halber als Fig. 4b nochmals dargestellt) bildet, wird die Verteilung der Fig. 4c erhalten. Diese geht ausschließlich auf dasjenige reflektierte Licht zurück, welches der Sensor 9 aus dem Riss 10 empfängt. Aus der Tatsache, das überhaupt eine Differenzverteilung mit signifikant positiven Intensitäten erhalten wird, kann der Signalprozessor bereits auf das Vorliegen eines Risses schließen. Die Lage des beleuchteten Bereichs 18' auf der CCD-Zeile 14 des Sensors 9 erlaubt hier sogar einen Rückschluß auf die Ausmaße des Risses.

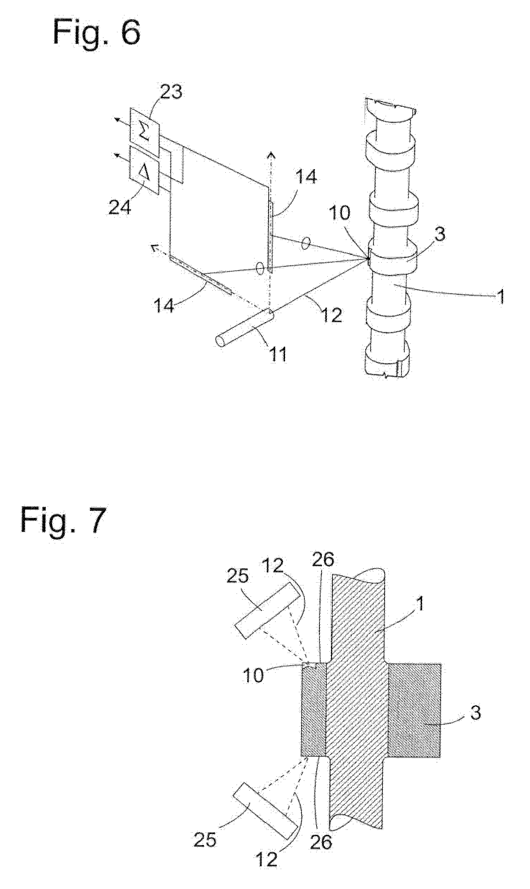

Die zwei Triangulationssensoren 7, 9 können für die Zwecke des erfindungsgemäßen Verfahrens ersetzt werden durch einen einzigen kombinierten Sensor, in dem, wie in Fig. 6 gezeigt, von einem einzigen Laser 11 ausgestrahlte und an der zu prüfenden Oberfläche reflektiertes Licht von zwei CCD-Zeilen 14 aufgefangen wird, die sich in zueinander und zur Strahlrichtung des Lasers 11 senkrechten Richtungen erstrecken. Von den beiden CCD-Zeilen 14 ist nur die zum Riss 10 des Nockens 3 parallele in der Lage, den Riss zu sehen. Für die Messung der Form des Nockens 3 kann die Intensitätsverteilung einer beliebigen der beiden CCD-Zeilen 14 oder die Summe von beiden aus einer Additionsschaltung 23 herangezogen werden; für die Risserfassung kann entsprechend eine Differenzschaltung 24 vorgesehen sein.

Die bislang betrachteten Beispiele von Triangulationssensoren liefern jeweils einen zur Drehachse der Nockenwelle 1 senkrechten Laserstrahl und sind daher im Wesentlichen geeignet zur Erfassung von Reissen an in Umfangsrichtung orientierten Oberflächen. Mit Hilfe geeignet orientierter Sensoren können Risse auch an anderen Oberflächen wie etwa den Stirnseiten von Nocken, Zahnrädern oder dergleichen erfasst werden.

Fig. 7 zeigt einen schematischen Schnitt durch einen Abschnitt einer Nockenwelle mit zwei Triangulationssensoren 25 zur Erfassung von radialen Rissen an entgegengesetzten Stirnflächen 26 des Nocken 3. Die Laserstrahlen 12 der Sensoren 25 laufen im spitzen Winkel auf die Achse der Nockenwelle 1 zu. Die Achse der Nockenwelle 1 verläuft in der Schnittebene der Figur, die gleichzeitig Messebene der beiden Triangulationssensoren 25 ist.

### Bezugszeichen

- 1: Nockenwelle
- 2: Backen
- 3: Nocken
- 4: Kettenrad
- 5: Schlitten
- 6: Triangulationssensor
- 7: Triangulationssensor
- 8: Triangulationssensor
- 9: Triangulationssensor
- 10: Riss
- 11: Laser
- 12: Strahl
- 13: Linse
- 14: CCD-Zeile
- 15: Farbfilter
- 16: Punkt
- 17: Punkt
- 18: Region
- 19: Spitze
- 20: Minimum
- 21: Peak
- 22: Flanke
- 23: Additionsschaltung
- 24: Differenzschaltung
- 25: Triangulationssensor
- 26: Stirnfläche

## Patentansprüche

1. Verfahren zur Qualitätsprüfung einer Oberfläche eines Werkstücks (1; 3) mit den Schritten
a) Bereitstellen eines Sensors (9) mit einem Sender (11) für einen Messstrahl (12) und einem Empfänger (14) für einen zurückgeworfenen Strahl, wobei der Messstrahl (12) und eine Richtung des zurückgeworfenen Strahls, für die der Empfänger (14) empfindlich ist, eine Messebene definieren;
b) Bewegen von Werkstück (1; 3) und Sensor (9) relativ zueinander derart, dass eine Vorzugsrichtung von Rissen (10) des Werkstücks an jedem vom Messstrahl (12) getroffenen Punkt der zu untersuchenden Oberfläche in der Messebene liegt;
c) Erfassen eines Risses (10) in der Oberfläche bei Vorliegen eines für einen Riss charakteristischen Fluktuationsmusters in einem Ausgangssignal des Empfängers (14).

2. Verfahren nach Anspruch 1, **gekennzeichnet durch** den Schritt des Mahlens der Vorzugsrichtung quer zu einer im Werkstück (3) wirkenden zugspannung.

3. Verfahren nach Anspruch 1 oder 2, **dadurch gekennzeichnet, dass** es an einem auf eine Welle aufgepressten Werkstück (3) ausgeführt wird.

4. Verfahren nach Anspruch 3, **gekennzeichnet durch** Schritt des Drehens von Werkstück (3) und Sensor (9) relativ zueinander um eine Achse der Welle.

5. Verfahren nach Anspruch 4, **dadurch gekennzeichnet, dass** die Achse der Welle in der Messebene liegt.

6. Verfahren nach einem der vorhergehenden Ansprüche, **dadurch gekennzeichnet, dass** das Ausgangssignal des Empfängers repräsentativ für den Abstand (d) zwischen Sensor (9) und Oberfläche ist und das Fluktuationsmuster einen kurzzeitigen Anstieg (21) des Abanzeigt.

7. Verfahren nach Anspruch 6, **gekennzeichnet durch** den Schritt des vergleichens von aus dem Ausgangssignal (d) des Empfängers (14) erhaltenen Abstandsmesswerten mit Soll-Abstandswerten.

8. Verfahren nach einem der vorhergehenden Ansprüche, **gekennzeichnet durch** den Schritt des Hochpassfilterns des Ausgangssignals (d) des Empfängers.

9. Vorrichtung zur Qualitätsprüfung einer Oberfläche eines Werkstücks (3), welche umfasst:
- wenigstens einen ersten Sensor (9), der einen Sender (11) für einen Messstrahl (12) und einen Empfänger (14) für einen zurückgeworfenen Strahl aufweist, wobei der Messstrahl (12) und eine Richtung des zurückgeworfenen Strahls, für die der Empfänger (14) empfindlich ist, eine Messebene definieren;
- Antriebsmittel zum Bewegen von Werkstück (3) und Sensor (9) relativ zueinander derart, dass eine Vorzugsrichtung von Rissen (10) an jedem vom Messstrahl (12) getroffenen Punkt der zu untersuchenden Oberfläche in der Messebene liegt;
- einen Signalprozessor zum Verarbeiten eines Ausgangssignals des Empfängers (14), der eingerichtet ist, ein für einen Riss (10) charakteristisches Fluktuationsmuster im Ausgangssignal des Empfängers (14) zu erfassen.

10. Vorrichtung nach Anspruch 9, **dadurch gekennzeichnet, dass** der erste Sensor (9) ein Triangulationssensor ist und sein Empfänger (14) eine sich in der Messebene erstreckende Zeile von Empfängerelementen (14₁, 14₂, ..., 14ₙ) umfasst.

11. Vorrichtung nach Anspruch 9 oder 10, **dadurch gekennzeichnet, dass** die Antriebsmittel einen Drehantrieb mit einer in der Messebene verlaufenden Drehachse umfassen.

12. Vorrichtung nach Anspruch 11, **dadurch gekennzeichnet, dass** die Antriebsmittel ferner einen Linearantrieb mit einer zur Drehachse parallelen Vorschubrichtung umfassen.

13. Vorrichtung nach einem der ansprüche 9 bis 12, **dadurch gekennzeichnet, dass** sie einen zweiten Sensor (7) mit einer Messebene umfasst, die die Messebene des ersten Sensors (9) kreuzt.

14. Vorrichtung- nach einem der Ansprüche 9 bis 13, **dadurch gekennzeichnet, dass** sie einen Signalprozessor umfasst, der ein Messsignal (d) wenigstens des ersten Sensors (9) empfängt und eingerichtet ist, einen Riss (10) des Werkstücks (3) zu erfassen, wenn das Messsignal (d) signifikant von einem Sollwert abweicht.

15. Vorrichtung nach einem der Ansprüche 9 bis 14, **dadurch gekennzeichnet, dass** sie ein Hochpassfilter zum Filtern eines Messsignals wenigstens des ersten Sensors umfasst.
